# FASCICULE DE BREVET EUROPEEN

(11) **EP 0 516 515 B1**
(45) Date de publication et mention de la délivrance du brevet: **19.04.1995**
(21) Numéro de dépôt: 92401405.3
(22) Date de dépôt: 22.05.1992
(51) Int. Cl.: F16L 33/207

(54) **Raccord pour tuyau en caoutchouc à armature textile**
Verbindung für Gummischlauch mit textiler Armierung
Joint for rubber hose with textile reinforcement

(30) Priorité: 30.05.1991 FR 9106504
(43) Date de publication de la demande: 02.12.1992
(73) Titulaire: HUTCHINSON, F-75008 Paris (FR)
(72) Inventeur: Blin, Philippe, F-37260 Monts (FR); Ladouce, Jacques, F-37240 La Chapelle Blanche (FR)
(74) Mandataire: Doireau, Marc

(56) Documents cités:
- AU-B- 510 400
- DE-A- 2 627 100
- DE-A- 3 529 889
- FR-A- 1 199 001
- GB-A- 2 220 242
- US-A- 2 384 635
- US-A- 4 603 888

## Description

La présente Invention concerne un raccord pour tuyau en caoutchouc à armature textile, du type comprenant un embout et une douille métalliques entre lesquels une extrémité du tuyau est emprisonnée après sertissage.

D'une manière générale, tout raccord doit nécessairement remplir une fonction accrochage et une fonction étanchéité tant statique que dynamique.

Dans un raccord du type précité, ces fonctions sont assurées par deux ensembles complémentaires de dents et de gorges prévues à la surface périphérique externe de l'embout et à la surface périphérique interne de la douille, respectivement.

D'une manière générale, un tuyau en caoutchouc à armature textile présente une meilleure raideur statique et dynamique qu'un tuyau en caoutchouc à armature métallique, c'est-à-dire qu'il permet notamment d'amortir les vibrations auxquelles le tuyau peut être soumis et de limiter leur transmission, et il présente une bonne résistance à la corrosion.

Cependant, pour des pressions relativement élevées, de l'ordre de 200 bars, l'Homme de Métier utilise toujours des tuyaux à armature métallique, notamment pour des problèmes posés au niveau des raccords des tuyaux. En effet, en dénudant l'extrémité du tuyau pour ne laisser subsister que la tresse métallique, on peut réaliser une opération de sertissage métal sur métal et obtenir ainsi un raccord capable également de tenir à de telles pressions. Au contraire, sachant que cette même opération de sertissage exécutée sur une armature textile entraîne un cisaillement de celle-ci, on préfère réaliser l'opération de sertissage directement sur le caoutchouc sans procéder au dénudage de la tresse textile afin de la protéger. Il en résulte une moins bonne tenue en pression du raccord du fait des problèmes de glissement inhérents à des contacts métal-caoutchouc, ce qui limite l'utilisation des tuyaux en caoutchouc à armature textile.

Dans le document DE-35 29 889, il est décrit un raccord pour un tuyau à armature textile, qui comprend une zone d'accrochage et une zone d'étanchéité statique, mais un tel raccord ne peut supporter des pressions relativement élevées, étant donné que dans la zone d'accrochage l'armature textile n'est pas directement au contact de l'embout et de la douille. En effet, après l'opération de sertissage, l'enveloppe externe du tuyau a flué en direction de la zone d'accrochage. Un tel raccord présente néanmoins une zone d'étanchéité dynamique, à son extrémité qui reçoit le tuyau, et qui sert de protection pour le tuyau en cas de propagation d'ondes.

Le but de l'Invention est de concevoir un raccord pour tuyau à armature textile qui puisse résister à des pressions élevées, de manière à combiner les avantages d'un tuyau à armature métallique et d'un tuyau à armature textile sans en présenter les inconvénients.

A cet effet, l'invention propose un raccord, en particulier pour tuyau en caoutchouc à armature textile, du type comprenant un embout et une douille métalliques entre lesquels une extrémité du tuyau est emprisonnée par sertissage, et comportant trois zones distinctes, une zone d'accrochage sur l'armature textile uniquement, une zone intermédiaire d'étanchéité statique et une zone d'étanchéité dynamique, caractérisé en ce que la zone d'accrochage de l'embout de la douille comporte deux ensembles complémentaires de dents et de gorges annulaires régulièrement espacées, chaque dent et chaque gorge ayant une forme arrondie en section transversale, en ce que la zone de l'embout assurant la fonction étanchéité dynamique est formée de plusieurs dents annulaires régulièrement espacées le long de la zone à la périphérie externe de l'embout, deux dents consécutives délimitant entre elles une gorge annulaire, chaque dent et chaque gorge ayant une forme arrondie en section transversale, et en ce que la zone de l'embout assurant la fonction étanchéité statique est formée d'au moins une partie conique de section décroissante en direction de la zone d'étanchéité dynamique.

Selon un mode de réalisation préférentiel de l'Invention et afin ne mieux répartir encore ces efforts tout au long de la zone d'accrochage, l'enveloppe délimitée par l'ensemble des dents de la douille s'évase légèrement au moins vers l'extrémité de la zone d'accrochage éloignée de la tête de raccord.

Selon encore une autre caractéristique de l'Invention, les dents et les gorges de la zone assurant la fonction étanchéité dynamique ont des dimensions telles que les efforts de compression exercés dans cette zone, après sertissage, diminuent au fur et à mesure que l'on se rapproche de l'extremité du raccord éloignée de la tête de raccord.

Selon un mode de réalisation préférentiel de l'Invention et pour obtenir des efforts de compression pratiquement nuls, après sertissage, à ladite extrémité du raccord, l'enveloppe délimitée par les dents de la douille s'évase légèrement au moins vers cette extrémité.

Selon un mode de réalisation préférentiel de l'Invention, il est prévu au niveau de la zone d'étanchéité dynamique une zone complémentaire, destinée à provoquer le fluage du caoutchouc, après sertissage, en direction de la partie conique pour obtenir une meilleure étanchéité.

D'une manière avantageuse, l'armature textile est dénudée sur une longueur supérieure à celle de la zone d'accrochage afin de déborder en partie sur la surface conique de la zone d'étanchéité statique.

D'autres avantages et détails de l'Invention ressortiront de la Description explicative qui va suivre faite en référence au Dessin annexé, donné uniquement à titre d'exemple, et dans lequel :
- la figure 1 est une vue en coupe d'un raccord conforme à l'Invention avant l'opération de sertissage,
- et la figure 2 est une vue extérieure du raccord avec des arrachements partiels pour montrer la déformation du tuyau en différents points du raccord après l'opération de sertissage.

Le raccord 1 conforme à l'Invention comprend d'une façon connue en soi un embout 2 et une douille 3 métalliques entre lesquels vient se loger une extrémité d'un tuyau 5 constitué de deux enveloppes en caoutchouc respectivement interne 6a et externe 6b, et d'une armature textile 7 interposée entre les deux enveloppes.

A une extrémité formant tête de raccord 1a, l'embout 2 se termine par un élément de raccordement 8 tel un écrou à jonc. La douille 3, à son extrémité adjacente à la tête de raccord 1a, présente un rebord interne 9 formant talon destiné à venir se loger, après sertissage, dans une gorge 9a prévue à la surface périphérique externe de l'embout 2.

Le raccord 1 présente trois zones distinctes :
- une zone A assurant une fonction accrochage,
- une zone ED assurant une fonction étanchéité dynamique,
- et une zone intermédiaire ES assurant une fonction étanchéité statique.

D'une manière générale, la zone A assurant la fonction accrochage est située du côté tête de raccord 1a et elle est formée de deux ensembles complémentaires de dents et de gorges prévues à la surface périphérique externe de l'embout 2 et à la surface périphérique interne de la douille 3, respectivement. La zone d'accrochage A au niveau de l'embout 2 est formée de plusieurs dents annulaires 10 régulièrement espacées le long de la zone A, deux dents 10 consécutives délimitant entre elles une gorge annulaire 11. Chaque dent 10 et chaque gorge 11 ont en section transversale une forme arrondie. Avantageusement, les dents 10 et les gorges 11 ont une forme circulaire avec des rayons de courbure sensiblement égaux pour former une ondulation régulière tout au long de la zone d'accrochage A.

D'une manière générale, la zone d'accrochage A au niveau de la douille 3 est formée d'une manière complémentaire d'un ensemble de dents et gorges qui présentent globalement les mêmes caractéristiques que celles des gorges 11 et des dents 10 de l'embout 2.

Le tuyau 5 est dénudé pour ne laisser subsister que l'armature textile 7 sur une longueur correspondant au moins à la longueur de la zone d'accrochage A du raccord, les formes arrondies des dents et des gorges permettant d'éviter au maximum le cisaillement de la tresse textile 7 lors de l'opération de sertissage, grâce à une bonne répartition des efforts exercés sur l'ensemble des dents.

Cependant, pour que ces efforts soient encore mieux répartis sur l'ensemble des dents de la zone d'accrochage A, tant au niveau de l'embout 2 qu'au niveau de la douille 3, il est avantageusement prévu sur la douille 3 deux séries de dents successives 12 et 12a en partant de la tête de raccord 1a. Les dents 12 et les gorges 13 délimitées par ces dents ont globalement les mêmes caractéristiques que celles des dents 10 et des gorges 13 de l'embout 2. Autrement dit, l'enveloppe délimitée par les dents 12 de l'embout 2 est globalement cylindrique. Par contre, l'enveloppe définie par les dents 12a s'évase légèrement en direction de l'extrémité de la zone d'accrochage A éloignée de la tête de raccord 1a, cet évasement indiqué en 14 étant obtenu par une diminution de la hauteur des dents 12a.

La zone ED assurant l'étanchéité dynamique est située vers l'extrémité 1b opposée à la tête de raccord 1a, et elle est également formée de deux ensembles complémentaires de dents et de gorges prévues à la surface périphérique externe de l'embout 2 et à la surface périphérique interne de la douille 3. La zone ED au niveau de l'embout 2 est formée de plusieurs dents annulaires 15 arrondies et régulièrement espacées le long de cette zone, deux dents 15 consécutives délimitant entre elles une gorge annulaire arrondie 16. Dans l'exemple considéré ici, le rayon de courbure des dents 15 est inférieur à celui des dents 10, 12 et 12a de la zone d'accrochage A, mais celui des gorges 16 est plus grand que le rayon de courbure des gorges 11 et 13 de la zone A.

D'une manière générale, la zone ED correspondant à la fonction étanchéité dynamique au niveau de la douille 3 est également formée d'un ensemble de dents 17 et de gorges 18 destinées à coopérer de manière complémentaire avec l'ensemble des gorges 16 et des dents 15 de la zone ED associée de l'embout 2. Avantageusement, les dents 17 ont en section transversale une forme globalement trapézoïdale mieux adaptée aux gorges 16 relativement larges de l'embout 2.

Pour obtenir une meilleure étanchéité dynamique, c'est-à-dire, pour que le raccord 1 ait une meilleure tenue mécanique à des à-coups de pression sans risque de rupture du tuyau 5 au niveau de l'extrémité 1b du raccord 1, l'enveloppe délimitée par les dents 17 de la douille 3 s'évase légèrement en direction de l'extrémité 1b du raccord 1, cet évasement indiqué en 19 étant obtenu par une diminution de la hauteur des dents.

La zone intermédiaire ES située entre les zones A et ED précitées assure la fonction étanchéité statique pour des pressions sensiblement constantes.

Au niveau de de la surface périphérique externe de l'embout 2, cette zone ES est formée d'une surface conique 20 de section décroissante entre la zone d'accrochage A jusqu'à la zone d'étanchéité dynamique ED.

Selon un mode préférentiel de l'Invention, cette surface conique 20 se prolonge en direction de la zone ED par une zone complémentaire ES′ qui a pour fonction de provoquer un fluage du caoutchouc en direction de la surface conique 20 après l'opération de sertissage. Cette zone ES′ est formée d'une dent annulaire 22 qui délimite avec la première dent adjacente 15 de la zone ED, une gorge 23 à fond plat et ayant un minimum de profondeur pour faire fluer le caoutchouc de l'enveloppe interne 6a de part de d'autre de la gorge 23.

Au niveau de la surface périphérique interne de la douille 3, la zone d'étanchéité statique ES est formée d'une gorge annulaire 25 globalement complémentaire de la surface conique 20 de l'embout 2, et de deux dents annulaires trapézoïdales 26 qui délimitent entre elles une gorge annulaire 27 complémentaire de la dent 22 de l'embout 2.

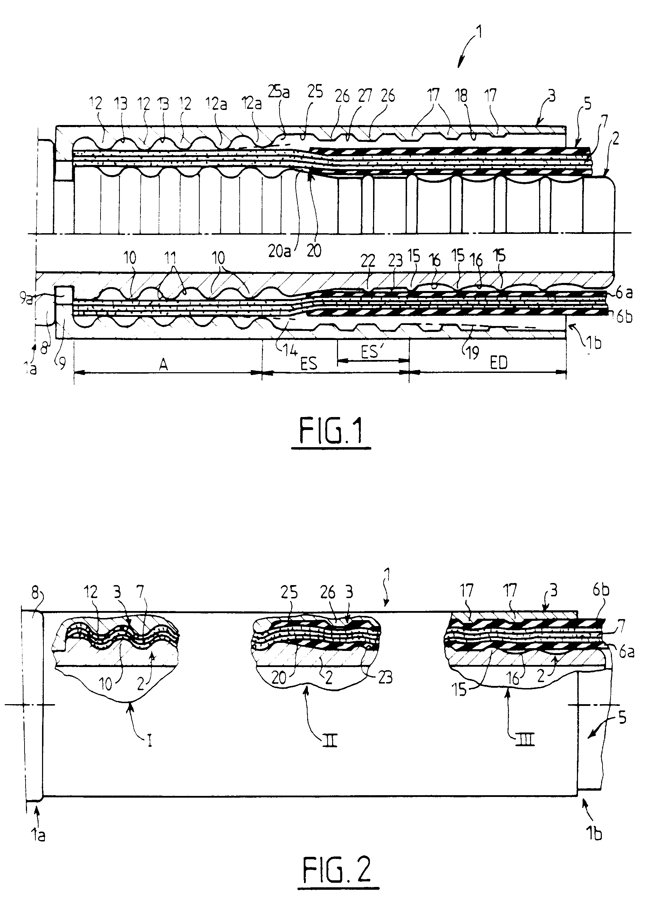

Le raccord 1 tel que représenté à la figure 1 montre le positionnement de l'embout 2, de la douille 3 et de l'extrémité du tuyau 5 avant l'opération de sertissage.

Il est à noter que les deux ensembles de dents et de gorges de l'embout 2 et de la douille 3 sont axialement décalés l'un par rapport à l'autre pour compenser l'allongement de la douille 3 au cours de l'opération de sertissage. Ce désalignement est tel qu'à la fin de cette opération, les dents de la douille 3 sont en regard des gorges associées de l'embout 2, et inversement les dents de l'embout 2 sont en regard des gorges associées de la douille 3.

Il est à noter également que l'extrémité du tuyau 5 avant d'être positionnée entre l'embout 2 et la douille 3, d'une manière manuelle ou automatique au moyen d'une emmancheuse, a été dénudée de manière à ne laisser subsister que l'armature textile 7 sur une longueur s'étendant au-delà de la zone d'accrochage A.

Concrètement, l'armature textile 7 est mise à nu jusqu'au voisinage de la partie médiane de la surface conique 20 de la zone ES assurant la fonction étanchéité statique. Autrement dit avant sertissage, l'enveloppe 6a en caoutchouc du tuyau 5 ne recouvre pas la base de la surface conique 20 de l'embout 2 adjacente à la zone d'accrochage A, et laisse un espace vide 20a, et l'enveloppe externe 6b en caoutchouc du tuyau 5 ne s'étend pas sur toute la largeur de la gorge 25 de la douille 3 et laisse subsister, du côté de la gorge adjacent à la zone A, un espace vide 25a.

En se reportant à la figure 2, le raccord 1 est représenté vu de l'extérieur avec trois arrachements partiels I, II et III montrant la déformation du tuyau 5 après sertissage dans les trois zones A, ES et ED, respectivement.

Dans la zone A assurant la fonction accrochage (arrachement I), l'armature textile 7 s'est déformée pour épouser les ondulations formées par l'ensemble des dents et des gorges de cette zone d'accrochage A.

Dans la zone ES assurant la fonction étanchéité statique (arrachement II), il est important de noter que les espaces vides précités 20a au niveau de la surface conique 20 de l'embout 2 et 25a de la gorge 20 de la douille 3 ont été comblés par suite du fluage du caoutchouc des enveloppes interne 6a et externe 6b, respectivement.

Enfin, dans la zone ED assurant la fonction étanchéité dynamique (arrachement III), les gorges 18 de l'embout 2 situées vers l'extrémité 1b du raccord 1 ne sont pas entièrement comblées par le caoutchouc de l'enveloppe interne 6a, de manière à laisser une certaine liberté au tuyau 5 lorsqu'il est soumis à des à-coups de pression.

Bien entendu, l'Invention n'est pas limitée au mode de réalisation décrit précédemment et donné uniquement à titre d'exemple.

## Revendications

1. Raccord, en particulier pour tuyau en caoutchouc à armature textile, du type comprenant un embout et une douille métalliques entre lesquels une extrémité du tuyau est emprisonnée par sertissage, et comportant trois zones distinctes, une zone d'accrochage (A) sur l'armature textile uniquement, une zone intermédiaire d'étanchéité statique (ES) et une zone d'étanchéité dynamique (ED), caractérisé en ce que la zone d'accrochage (A) de l'embout (2) et de la douille (3) comporte deux ensembles complémentaires de dents et de gorges annulaires régulièrement espacées, chaque dent et chaque gorge ayant une forme arrondie en section transversale, en ce que la zone (ED) de l'embout (2) assurant la fonction étanchéité dynamique est formée de plusieurs dents annulaires (15) régulièrement espacées le long de la zone (ED) à la périphérie externe de l'embout (2), deux dents consécutives (15) délimitant entre elles une gorge annulaire (16), chaque dent (15) et chaque gorge (16) ayant une forme arrondie en section transversale, et en ce que la zone (ES) de l'embout (2) assurant la fonction étanchéité statique est formée d'au moins une partie conique (20) de section décroissante en direction de la zone d'étanchéité dynamique (ED).

2. Raccord selon la Revendication 1, caractérisé en ce que l'armature textile (7) du tuyau (5) est comprise entre deux enveloppes respectivement interne (6a) et externe (6b) en caoutchouc, et en ce que l'extrémité du tuyau (5), avant d'être engagée entre l'embout (2) et la douille (3), est dénudée pour ne laisser subsister que l'armature textile (7) venant directement au contact de l'embout (2) et de la douille (3) après l'opération de sertissage.

3. Raccord selon la Revendication 1 ou 2, caractérisé en ce que la zone d'accrochage (A) au niveau de l'embout (2) est formée de plusieurs dents annulaires (10) régulièrement espacées le long de la zone (A) à la surface périphérique externe de l'embout (2), deux dents consécutives (10) délimitant entre elles une gorge annulaire (11), chaque dent (10) et chaque gorge (11) ayant en section transversale une forme circulaire avec sensiblement le même rayon de courbure.

4. Raccord selon la Revendication 3, caractérisé en ce que la zone d'accrochage (A) au niveau de la douille (3) est formée d'au moins une première série de dents annulaires (12) régulièrement espacées le long de la zone (A) à la surface périphérique interne de la douille (3), deux dents consécutives (12) délimitant entre elles une gorge annulaire (13), chaque dent (12) et chaque gorge (13) ayant en section transversale une forme circulaire avec sensiblement le même rayon de courbure que celui des dents (10) et des gorges (11) de la zone d'accrochage (A) de l'embout (2).

5. Raccord selon la Revendication 4, caractérisé en ce que la zone d'accrochage (A) de la douille (3) comprend une deuxième série de dents annulaires (12a) régulièrement espacées le long de la zone (A) à la surface périphérique interne de la douille (3), l'enveloppe délimitée par les dents (12a) s'évasant en direction de la zone intermédiaire (ES).

6. Raccord selon l'une quelconque des Revendications 1 à 5, caractérisé en ce que la zone (ED) de la douille (3) assurant la fonction étanchéité dynamique est formée de plusieurs dents annulaires (17) délimitant entre elles une gorge annulaire (18), chaque dent (17) et chaque gorge (18) ayant en section transversale une forme globalement trapézoïdale.

7. Raccord selon la Revendication 6, caractérisé en ce que l'enveloppe délimitée par les dents (17) s'évase vers l'extérieur en direction de l'extrémité (1b) du raccord (1).

8. Raccord selon l'une quelconque des Revendications 1 à 7, caractérisé en ce que la partie conique (20) de la zone d'étanchéité dynamique (ED) se prolonge en direction de la zone (ED) par une zone d'étanchéité (ES') qui provoque, après sertissage, le fluage du caoutchouc de l'enveloppe interne (6a) du tuyau (5) en direction de la partie conique (20).

9. Raccord selon la Revendication 8, caractérisé en ce que ladite zone (ES') est formée d'une dent annulaire (22) qui délimite avec la première dent adjacente (15) de la zone (ED) une gorge (23) à fond plat ayant un minimum de profondeur.

10. Raccord selon la Revendication 9, caractérisé en ce que la zone (ES) de la douille (3) assurant l'étanchéité statique est formée d'au moins une gorge annulaire (25) globalement complémentaire de la surface conique (20), et de deux dents annulaires (26) qui délimitent entre elles une gorge annulaire (27) complémentaire de la dent (22) de la zone (ES') de l'embout (2).

## Claims

1. A connection, in particular for a textile reinforced rubber pipe, of the type comprising a metal end piece and sleeve between which one end of the pipe is crimped, and having three separate zones, a zone (A) which performs solely the function of attachment to the textile reinforcement, a static sealing intermediate zone (ES) and a dynamic sealing zone (ED), characterized in that the attachment zone (A) between the end piece (2) and the sleeve (3) comprises two complementary sets of regularly spaced annular teeth and grooves, each tooth and each groove having a rounded shape in transverse cross-section, in that the zone (ED) of the end piece (2) providing the dynamic sealing function is formed of several annular teeth (15) which are regularly spaced along the zone (ED) on the outer periphery of the end piece (2), two consecutive teeth (15) bounding between them an annular groove (16), each tooth (15) and each groove (16) having a rounded shape in transverse cross-section, and in that the zone (ES) of the end piece (2) forming the static sealing function comprises at least a tapering portion (20) of cross-section decreasing in the direction of the dynamic sealing zone (ED).

2. A connection according to claim 1, characterized in that the textile reinforcement (7) of the pipe (5) lies between two envelopes, an inner (6a) and an outer (6b) respectively of rubber, and in that, before being engaged between the end piece (2) and the sleeve (3), the sealing material of the pipe (5) is stripped off to leave only the textile reinforcement (7) which comes directly into contact with the end piece (2) and the sleeve (3) after the crimping operation.

3. A connection according to claim 1 or 2, characterized in that the attachment zone (A) in the vicinity of the end piece (2) comprises a plurality of annular teeth (10) which are regularly spaced along the length of zone (A) on the outer peripheral surface of the end piece (2), two consecutive teeth (10) bounding an annular groove (11) between them, each tooth (10) and each groove (11) being of circular shape in transverse cross-section with substantially the same radius of curvature.

4. A connection according to claim 3, characterized in that the attachment zone (A) in the vicinity of the sleeve (3) comprises at least a first series of annular teeth (12) regularly spaced along the length of the zone (A) at the inner peripheral surface of the sleeve (3), two consecutive teeth (12) bounding between them an annular groove (13), each tooth (12) and each groove (13) being of circular shape in transverse cross-section with substantially the same radius of curvature as the teeth (10) and the grooves (11) in the zone of attachment (A) to the end piece (2).

5. A connection according to claim 4, characterized in that the attachment zone (A) of the sleeve (3) comprises a second series of annular teeth (12a) which are regularly spaced along the length of the zone (A) at the inner peripheral surface of the sleeve (3), the envelope bounded by the teeth (12a) flaring out in the direction of the intermediate zone (ES).

6. A connection according to any of the preceding claims, characterized in that the zone (ED) of the sleeve (3) providing the dynamic sealing function comprises several annular teeth (17) bouding between them an annular groove (18), each tooth (17) and each groove (18) having an generally trapezoidal shape in transverse cross-section.

7. A connection according to claim 6, characterized in that the envelope bounded by the teeth (17) flares outwards in the direction of the end (1b) of the connection (1).

8. A connection according to any of the preceding claims, characterized in that the tapering portion (20) of the dynamic sealing zone (ED) is extended in the direction of the zone (ED) by a sealing zone (ES') which causes the inner rubber envelope (6a) of the pipe (5) to creep in the direction of the tapering portion (20) after crimping.

9. A connection according to claim 8, characterized in that the said zone (ES') is constructed of an annular tooth (22) which together with the first adjacent tooth (15) of the zone (ED) bounds a flat bottomed groove (23) of minimum depth.

10. A connection according to claim 9, characterized in that the zone (ES) of the sleeve (3) providing the static seal is constructed of at least one annular groove (25) which is generally complementary to the tapering surface (20) and two annular teeth (26) which between them bound an annular groove (27) which is complementary to the tooth (22) of the zone (ES') of the end piece (2).

## Patentansprüche

1. Anschlußstück, insbesondere für einen Schlauch aus Gummi mit einer textilen Armierung der Art, die einen metallischen Ansatzstutzen und eine metallische Hülse umfaßt zwischen denen ein Ende des Schlauches durch Falzung eingeschlossen ist, und die drei getrennte Zonen aufweist, einen Bereich (A), der für ein Ankuppeln sorgt, einen Zwischenbereich (ES), der die statische Dichtung gewährleistet, und einen Bereich (ED), der die dynamische Dichtung gewährleistet, dadurch gekennzeichnet, daß der Kupplungsbereich (A) zwischen den Ansatzstutzens (2) und der Hülse (3) aus zwei komplementären Komplexen besteht aus Zähnen und ringförmigen Rillen in regelmäßigen Abständen, wobei jeder Zahn und jede Rille im Querschnitt eine abgerundete Form besitzt, daß der Bereich (ED) des Ansatzstutzens (2), der die dynamische Dichtheit gewährleistet, von mehreren ringförmigen Zähnen (15) gebildet wird, die entlang des Bereiches (ED) am äußeren Rand des Ansatzstutzens (2) in regelmäßigen Abständen angeordnet sind, und von zwei nachfolgenden Zähnen (15), die zwischen sich eine ringförmige Rille (16) einschließen, wobei jeder Zahn (15) und jede Rille (16) im Querschnitt eine abgerundete Form besitzen, und daß der Bereich (ES) des Anschlußstutzens (2), der die statische Dichtung gewährleistet, von mindestens einem konischen Abschnitt (20) gebildet wird, und zwar mit dem sich verjüngenden Querschnitt in Richtung des Bereiches der dynamischen Dichtung (ED).

2. Anschlußstück nach Anspruch 1, dadurch gekennzeichneit, daß die textile Armierung (7) des Schlauches (5) zwischen zwei Mänteln aus Gummi, einem inneren (6a) und einem äußeren (6b), respektive enthalten ist, und daß die Dichtung des Schlauches (5), bevor er zwischen dem Ansatzstutzen (2) und der Hülse (3) angebracht wird, offenliegt, um den direkten Kontakt zwischen der textilen Armierung (7) und dem Ansatzstutzen (2) sowie der Hülse (3) nach dem Falzvorgang aufzuheben.

3. Anschlußstück nach Ansparuch 1 oder 2, dadurch gekennzeichnet, daß der Ankupplungsbereich (A) auf der Höhe des Ansatzstutzens (2) aus mehreren ringförmigen Zähnen (10) gebildet wird, die entlang der Bereiches (A) auf der äußeren peripheren Oberfläche des Ansatzstutzens (2) in regelmAßigen Abständen angeordnet sind und zwei nachfolgenden Zähnen (10), die zwischen sich eine ringförmige Rille (11) einschließen, wobei jeder Zahn (10) und jede Rille (11) im Querschnitt eine abgerundete Form mit deutlich dem gleichen Krümmungsradius besitzen.

4. Anschlußstück nach Anspruch 3, dadurch gekennzeichnet, daß der Ankupplungsbereich (A) auf der Höhe der Hülse (3) durch mindestens eine erste Folge von rignförmigen Zähnen (12) gebildet wird, die entlang des Bereiches (A) auf der inneren peripheren Oberfläche der Hülse (3) in regelmäßigen Abständen angeordnet sind, und von zwei nachfolgenden Zähnen (12), die zwischen sich eine ringförminge Rille (13) einschließen, wobei jeder Zahn (12) und jede Rille (13) im Querschnitt eine abgerundete Form mit deutilich dem gleichen Krümmungsradius, entsprechend dem der Zähne (10) und der Rillen (11) des Kupplungsbereiches (A) des Ansatzstutzens (2) besitzen.

5. Anschlußstück nach Anspruch 4, dadurch gekennzeichnet, daß der Kupplungsbereich (A) der Hülse (3) eine zweite Folge von ringförmigen Zähnen (12a) besitzt, die entlang des Bereiches (A) auf der inneren peripheren Oberfläche der Hülse (3) in regelmäßigen Abständen angeordnet sind, wobei der Mantel durch die Zähne (12a), die sich in Richtung des Zwischenbereiches (ES) erstrecken, begrenzt wird.

6. Anschlußstück nach irgendeinem der vorhergehenden Ansprüche, dadurch gekennzeichnet, daß der Bereich (ED) der Hülse (3), der die dynamische Dichtheit gewährleistet, von mehreren ringförmigen Zähnen (17) gebildet wird, die zwischen sich eine ringförmige Rille (18) einschließen, wobei jeder Zahn (17) und jede Rille (18) im Querschnitt insgesamt eine trapezoide Form besitzt.

7. Anschlußstück nach Anspruch 6, dadurch gekennzeichnet, daß der Mantel, der durch die Zähne (17) begrenzt wird, sich in Richtung des Endes (1b) des Anschlußstückes (1) nach außen hin aufweitet.

8. Anschlußstück nach irgendeinem der vorhergehenden Ansprüche, dadurch gekennzeichnet, daß der konische Abschnitt (20) des Bereiches (ED), der die dynamische Dichtung gewärhrleistet, in Richtung des Bereiches (ED) durch einen Dichtungsbereich (ES') verlängert ist, dessen Funktion es ebenfalls ist, das Gleiten von Gummi des inneren Mantels (6a) des Schlauches (5) in Richtung des konischen Abschnitts (20) zu bewirken.

9. Anschlußstück nach Anspruch 8, dadurch gekennzeichnet, daß der besagte Bereich (ES') durch einen ringförmigen Zahn (22) gebildet wird, der zusammen mit dem ersten angrenzenden Zahn (15) des Bereiches (ED) eine Rille (23), mit einem flachen Boden, der eine minimale Tiefe besitzt, einschließt.

10. Anschlußstück nach Anspruch 9, dadurch gekennzeichnet, daß der Bereich (ES) der Hülse (3), der die statische Dichtheit gewährleistet, von mindestens einer ringförmigen Rille (25) gebildet wird, die insgesamt komplementär zur konischen Fläche (20) ist, und von zwei ringförmigen Zähnen (26), die eine ringförmige Rille (27), komplementär zum Zahn (22) des Bereiches (ES') des Ansatzstutzens (2), einschließen.
